(19) Europäisches Patentamt
European Patent Office
Office européen des brevets

(11) EP 4 811 598 A1

# (12) EUROPEAN PATENT APPLICATION

published in accordance with Art. 153(4) EPC

(43) Date of publication:
**23.09.2026 Bulletin 2026/39**

(21) Application number: **23958839.5**

(22) Date of filing: **14.11.2023**

(51) International Patent Classification (IPC):
***H02J 7/00*** $^{(2026.01)}$ ***H02J 1/00*** $^{(2026.01)}$

(52) Cooperative Patent Classification (CPC):
**H02J 1/00; H02J 7/00**

(86) International application number:
**PCT/JP2023/040997**

(87) International publication number:
**WO 2025/104830 (22.05.2025 Gazette 2025/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Harmonic Drive Systems Inc.**
**Shinagawa-ku**
**Tokyo 140-0013 (JP)**

(72) Inventors:
- **UENO Shintaro**
  **Azumino-shi, Nagano 399-8305 (JP)**
- **KATO Yuki**
  **Azumino-shi, Nagano 399-8305 (JP)**
- **KITAZAWA Hiroyuki**
  **Azumino-shi, Nagano 399-8305 (JP)**
- **WATANABE Homare**
  **Azumino-shi, Nagano 399-8305 (JP)**

(74) Representative: **TBK**
**Bavariaring 4-6**
**80336 München (DE)**

## (54) POWER FEED CIRCUIT, ROTATION DETECTION DEVICE, AND MOTOR AND ROTATION ACTUATOR PROVIDED WITH SAID ROTATION DETECTION DEVICE

(57) A power feed circuit (7c) of an encoder (5) supplies electric power from a main power supply and a battery (8) as driving electric power for a load-side memory unit (7b) via a diode OR circuit (10) provided with a first diode (D1) for reverse current protection and two second diodes (D2, D3) for reverse current protection. The diode OR circuit (10) is provided with a leakage current bypass line (16) that bypasses leakage current of the second diodes (D2, D3) to a ground potential side (GND). The leakage current bypass line (16) is formed from a third diode (D4) and a current limiting resistor (R3). This facilitates component selection and design of the diode OR circuit (10) and allows a resistive voltage divider circuit (15) to perform battery voltage detection properly.

FIG. 2A

7c
7
INSIDE ENCODER
D1
a1
LOAD
SERVO DRIVER POWER SOURCE
(MAIN CIRCUIT +5V)
11
12
10
7b
BATTERY CONSUMPTION CURRENT
a3
LEAKAGE CURRENT Ir
a2
BATTERY (+3.6V)
D4
R1
D2
D3
13
14
BATTERY VOLTAGE DETECTION
16
a5
R3
R2
a4
GND
LEAKAGE
BYPASS CURRENT
CURRENT PASSING THROUGH
VOLTAGE DIVIDER RESISTORS
15

EP 4 811 598 A1

FIG. 2B

7
7c
INSIDE ENCODER
D1
a1
LOAD
SERVO DRIVER POWER SOURCE
(MAIN CIRCUIT +5V)
11
12
10
7b
LEAKAGE CURRENT Ir
a2
BATTERY (+3.6V)
<DURING DISCONNECTION>
VBAT_IN
D4
R1
Ir´
D2
D3
14
VOLTAGE DIVIDER RESISTORS
BATTERY VOLTAGE DETECTION
13
a5
R3
R2
a4
GND
LEAKAGE
BYPASS CURRENT
CURRENT PASSING THROUGH
VOLTAGE DIVIDER RESISTORS
16
15

## Description

### TECHNICAL FIELD

The present invention relates to a power feed circuit provided with a diode OR circuit, which is used in a battery-backup-type rotation detection device or the like in which multi-turn information for a motor is stored in an onboard storage device. The present invention also relates to a rotation detection device provided with said power feed circuit, and a motor and rotation actuator provided with said rotation detection device.

### BACKGROUND ART

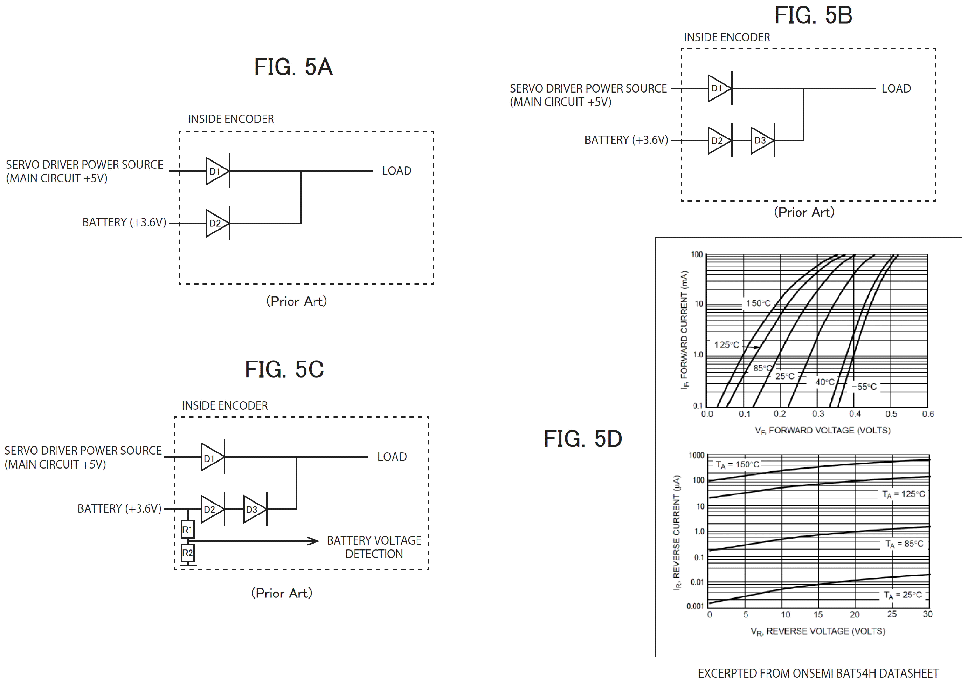

Devices incorporating a battery backup scheme to store and retain detected rotation information are known as rotation detection devices such as rotary encoders that detect motor rotation information. Circuits that automatically switch between and supply power from two different power sources (main power source and battery) via a diode OR circuit are known as power feed circuits that perform battery backup control. FIG. 5A shows an example of an encoder power feed circuit that supplies power from a motor servo driver power source (+5V) and a battery (+3.6V) to a load side of a storage device or the like via a diode OR circuit provided with diodes D1, D2 for preventing reverse currents. An electronic device provided with such a power feed circuit is disclosed in, for example, Patent Document 1.

In the power feed circuit shown in FIG. 5A, when the diode D2 connected to the external battery fails due to a short circuit, power from the servo driver power source (main circuit voltage +5V) is directly applied to the external battery, and a charging current is applied to the battery, which could lead to battery damage or an accident. To prevent such accidents, it is recommended to use two diodes D2, D3 connected in series, as shown in FIG. 5B, as the diode D2 placed in a power feed line of the battery (see page 22 of Non-patent Document 1).

### Prior Art Documents

#### Patent Documents

Patent Document 1: JP 2006-211829 A

#### Non-patent Documents

Non-patent Document 1: Toshiba Thionyl Chloride Lithium Battery Technology Catalog (May 2016), page 22

### SUMMARY OF THE INVENTION

### PROBLEMS TO BE SOLVED BY THE INVENTION

As shown in FIG. 5B, when a configuration is adopted in which two reverse-current-preventing diodes D2, D3 are connected in series to the power feed line of the battery, the design must take into account voltage drop due to leakage current and forward voltage of the diodes. In addition, since the relationship between leakage current and voltage drop is a trade-off, component selection and design become more complex.

For example, if switching diodes or rectifier diodes having low leakage current are used for the diodes D2, D3, a charging current to the battery will be lower, increasing battery safety. However, the voltage drop due to the forward voltage will increase, leading to more design constraints, such as lowering an operating voltage of an internal circuit load, and in some cases, the system may fail to function.

Conversely, if Schottky barrier diodes having a low voltage drop due to forward voltage are used for the diodes D2, D3, the design can be accomplished without lowering the operating voltage of the internal circuit load. However, the leakage current of the diodes will increase (in other words, the charging current to the external battery will increase), reducing battery safety.

In addition, as shown in the graph in FIG. 5D (excerpted from an ONSEMI BAT54H datasheet), a diode leakage current $I_R$ and voltage drop $V_F$ according to forward voltage vary significantly with temperature. At high temperatures, the leakage current increases but the voltage drop decreases, while at low temperatures, the leakage current decreases but the voltage drop increases. This temperature dependence of the diodes further complicates the design.

On the other hand, as shown in FIG. 5C, in a power feed circuit provided with a diode OR circuit, a resistive voltage divider circuit (R1, R2) for battery voltage detection may be attached to the battery power feed line in order to monitor the external battery voltage value inside the encoder. In this case, if the battery is suddenly removed due to reasons such as a disconnection in an environment where the diode leakage current is large, the leakage current flows through voltage

divider resistors R1, R2 constituting the resistive voltage divider circuit. As a result, a potential is generated between the voltage divider resistors. Ideally, the battery voltage detection value due to the resistive voltage divider circuit should be 0V. However, in such a case, the potential between the voltage divider resistors can rise to several volts, making it impossible to perform battery voltage detection as normal and to perform battery disconnection detection.

In view of such matters, an object of the present invention is to provide a power feed circuit that supplies power from a main power source and a battery to a load side via a diode OR circuit, wherein difficulties in selecting and designing components in the diode OR circuit caused by diode leakage current can be eliminated, and battery voltage detection using a resistive voltage divider circuit can be performed as normal without being affected by leakage current.

Another object of the present invention is to provide a battery-backup-type rotation detection device that uses said power feed circuit to supply drive power to a storage device that stores rotation information of a rotary body detected by a rotation information detection unit, and a motor and rotation actuator provided with said rotation detection device.

## MEANS USED TO SOLVE THE ABOVE-MENTIONED PROBLEMS

The present invention relates to a power feed circuit that supplies power from a main power source and a battery to a load side via a diode OR circuit provided with a reverse-current-preventing first diode disposed on a main power source feed line and a reverse-current-preventing second diode disposed on a battery power source feed line, the power feed circuit characterized by comprising

a leakage current bypass line that bypasses a leakage current of the second diode to a ground potential side,
the leakage current bypass line including a third diode and a current-limiting resistor connected in series to the third diode.

In the present invention, two diodes connected in series can be used as the second diode. In this case, the leakage current bypass line is preferably connected to an anode of either one of the two diodes in the battery power source feed line.

In the present invention, the power feed circuit may be equipped with a resistive voltage divider circuit for battery voltage detection. The resistive voltage divider circuit can be constituted of a plurality of voltage divider resistors connected in series between the ground potential side and the anodes of the second diodes in the battery power source feed line.

In such instances, a resistance value of the current-limiting resistor of the leakage current bypass line is preferably set to a value sufficiently larger than a combined resistance value of the voltage divider resistors of the resistive voltage divider circuit, e.g., at least 100 times the combined resistance value, so as to make it possible to avoid erroneous detection performed by the resistive voltage divider circuit due to the leakage current of the second diodes at times such as when the battery is disconnected.

In the present invention, the third diode of the leakage current bypass line is preferably the same component as the second diodes of the battery power source feed line.

Next, the power feed circuit of the present invention can be used as a power feed circuit that supplies power from a main power source and a battery as drive power for a storage device in a battery-backup-type rotation detection device in which rotation information for a rotary body detected by a rotation information detection unit is stored in an onboard storage device.

The rotation detection device is incorporated into, for example, a motor or a rotation actuator comprising a motor and a reducer, and is used to detect motor rotation information or reducer rotation information.

## EFFECT OF THE INVENTION

In the power feed circuit of the present invention, a leakage current of reverse-current-preventing second diodes constituting a diode OR circuit flows from a battery power source feed line to a leakage current bypass line, and is therefore prevented from flowing into a battery as charging current. Due to this feature, the selection and design of the diodes constituting the diode OR circuit are simplified, and damage to the battery caused by unnecessary charging current can also be prevented.

## BRIEF DESCRIPTION OF THE DRAWINGS

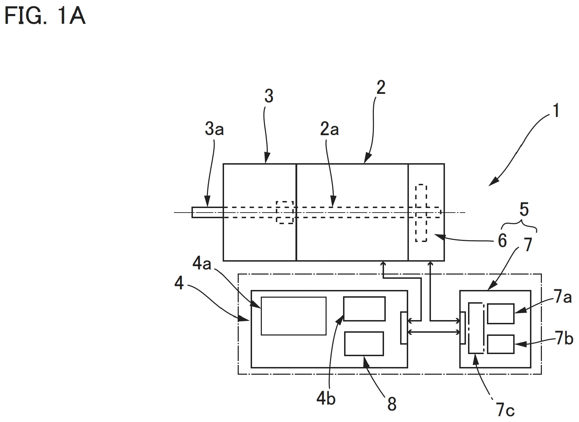

FIG. 1A is an explanatory drawing of an example of a rotation actuator provided with an encoder (rotation detection device) to which the present invention is applied;

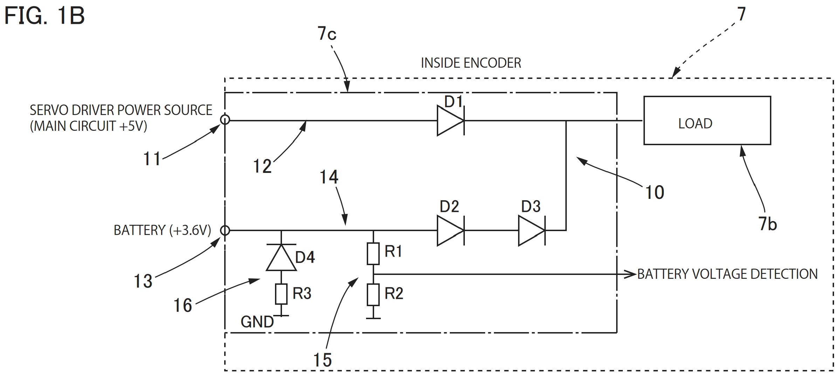

FIG. 1B is an explanatory drawing of a power feed circuit that is incorporated into a control device of the encoder shown

in FIG. 1A, and that supplies power from a motor servo driver power source and a battery to a load-side storage device or the like via a diode OR circuit;

FIG. 2A is an explanatory drawing of operation of the power feed circuit shown in FIG. 1B;

FIG. 2B is an explanatory drawing of operation of the power feed circuit shown in FIG. 1B when the battery is disconnected;

FIG. 2C is an explanatory drawing of operation of the power feed circuit shown in FIG. 1B when a third diode of a leakage current bypass line short-circuits and suffers damage;

FIG. 3 is an explanatory drawing of a power feed circuit of an encoder relating to another embodiment of the present invention, showing a case in which a leakage current bypass line is connected between two diodes connected in series;

FIG. 4A is a graph of the relationship between temperature and a battery voltage detection value due to a resistive voltage divider circuit in the power feed circuit shown in FIG. 1B, both when the battery is connected and when the battery is released (disconnected);

FIG. 4B is a graph of the relationship between temperature and the battery voltage detection value due to the resistive voltage divider circuit in the power feed circuit shown in FIG. 5C, both when the battery is connected and when the battery is released (disconnected);

FIG. 5A is an explanatory drawing of a power feed circuit of an encoder that supplies power from a motor servo driver power source and a battery to a load side via a diode OR circuit;

FIG. 5B is an explanatory drawing of an example of a case in which two diodes connected in series to a power feed line of the battery are used in the power feed circuit of FIG. 5A;

FIG. 5C is an explanatory drawing of an example of a case in which the power feed circuit of FIG. 5B is equipped with a resistive voltage divider circuit for battery voltage detection; and

FIG. 5D is a graph of the relationship between a diode leakage current $I_R$ and a voltage drop $V_F$ due to forward voltage, which fluctuate due to temperature, (excerpted from an ONSEMI BAT54H datasheet).

## MODE FOR CARRYING OUT THE INVENTION

Embodiments of the present invention are described below with reference to the drawings. The present invention is not limited to the configurations of the embodiments.

FIG. 1A is an explanatory drawing of an example of a rotation actuator provided with an encoder (rotation detection device) to which the present invention is applied. A rotation actuator 1 has a common basic configuration, and is provided with a motor 2, a reducer 3, a motor controller 4, and an encoder 5. The encoder 5 is provided with a rotation detection unit 6 attached to a rear end of the motor 2, and an encoder control unit 7 attached to the motor controller 4. The rotation detection unit 6 detects a rotation state of a rotating shaft 2a of the motor 2 and a rotation state of an output shaft 3a of the reducer 3. The encoder control unit 7 is provided with, *inter alia*: a calculation unit 7a that calculates rotation positions, rotation speeds, etc., of the rotating shaft 2a and the output shaft 3a on the basis of detection results from the rotation detection unit 6; a storage unit 7b that stores and retains the calculated rotation information; and a power feed circuit 7c that supplies power from an external power source to the other components. The motor controller 4 is provided with a control unit 4a, a servo driver 4b, etc., and controls the driving of the motor 2 on the basis of the rotation information detected and calculated by the encoder 5. The encoder 5 has a battery backup scheme, and a servo driver power source (e.g., a main circuit voltage +5V) and a battery (e.g., +3.6V) are supplied as external power sources (drive power sources) from the motor controller 4 side.

FIG. 1B is an explanatory drawing of the power feed circuit 7c installed in the battery-backup-type encoder control unit 7. The power feed circuit 7c supplies power from a battery 8 and a servo driver power source of the motor controller 4 to the load-side storage unit 7b via a diode OR circuit 10. The diode OR circuit 10 is provided with a reverse-current-preventing first diode D1 disposed on a main power source feed line 12 extending from a main power source terminal 11, and reverse-current-preventing second diodes disposed on a battery power source feed line 14 extending from a battery power source terminal 13. In the present example, two serially connected second diodes D2, D3 are provided. A cathode of the first diode D1 of the main power source feed line 12 and a cathode of the second diode D3 of the battery power source feed line 14 merge together and connect to the load-side storage unit 7b.

The power feed circuit 7c is equipped with a resistive voltage divider circuit 15 for detecting a battery voltage supplied from the battery 8. The resistive voltage divider circuit 15 includes two voltage divider resistors R1, R2 connected in series between a ground potential side GND and a position that, on the battery power source feed line 14, is between the battery power source terminal 13 and the second diode D2. The resistive voltage divider circuit 15 monitors a divided voltage value, whereby the battery voltage is detected.

The power feed circuit 7c is also equipped with a leakage current bypass line 16 that allows a leakage current of the two second diodes D2, D3, which flows in reverse through the battery power source feed line 14, to bypass the ground potential side GND. The leakage current bypass line 16 of the present example connects the ground potential side GND to

a position that, on the battery power source feed line 14, is between the battery power source terminal 13 and a connection point of the resistive voltage divider circuit 15. The leakage current bypass line 16 includes a third diode D4 and a current-limiting resistor R3 directly connected to the third diode D4. A value of the current-limiting resistor R3 is set sufficiently lower than a combined resistance value of the voltage divider resistors R1, R2 used for battery voltage detection. For example, a resistance value of the current-limiting resistor R3 is set to 10kΩ, and resistance values of the voltage divider resistors R1, R2 are set to 3MΩ and 1MΩ, respectively.

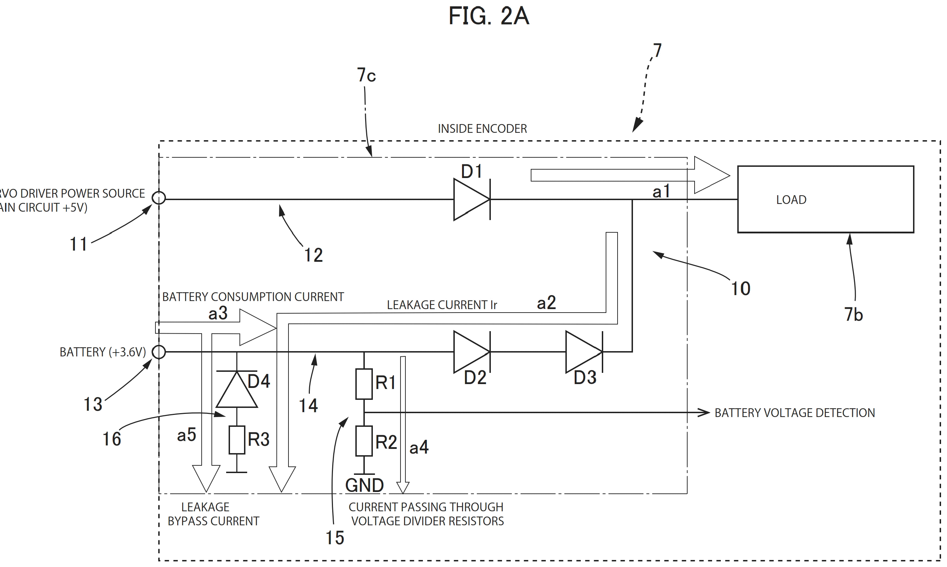

Referring to FIGS. 1A and 2A, operation of the power feed circuit 7c equipped with the leakage current bypass line 16 shall now be described. When the motor 2 is turned on, the power feed circuit 7c of the encoder 5 is supplied with a +5V driving current from the servo driver power source, and with a lower +3.6V driving current from the battery 8. A +5V driving current from the servo driver power source, which has a high voltage value, is supplied to the load-side storage unit 7b via the diode OR circuit 10 of the power feed circuit 7c (arrow a1). In a power supply state, a leakage current Ir is generated in the diodes D2, D3 (arrow a2). The leakage current Ir and a battery consumption current (arrow a3) are divided into a current passing through the voltage divider resistors R1, R2 (arrow a4) and a current flowing through the leakage current bypass line 16 (arrow a5), and as a result, charging current (reverse-current) to the battery 8 can be prevented.

The following description provides further detail. A potential at the voltage divider resistors R1, R2, i.e., a potential at an anode side of the second diode D2 is the battery voltage +3.6V, and the current flowing to the voltage divider resistors R1, R2 is therefore limited to +3.6V/(R1+R2). When the leakage current Ir is low, more of the leakage current Ir will flow to the voltage divider resistors R1, R2, but when the leakage current Ir is high, the leakage current will also flow to paths other than the voltage divider resistors. Therefore, by mounting the leakage current bypass line 16 composed of the third diode D4 and the current-limiting resistor R3, it is possible to bypass the leakage current component flowing in reverse through the battery power source feed line 14 without flowing to the voltage divider resistors R1, R2, and to prevent a charging current to the battery 8. This is particularly effective at higher temperatures because the leakage current Ir increases when higher-temperature environments are encountered due to the characteristics of the diodes (see FIG. 5D).

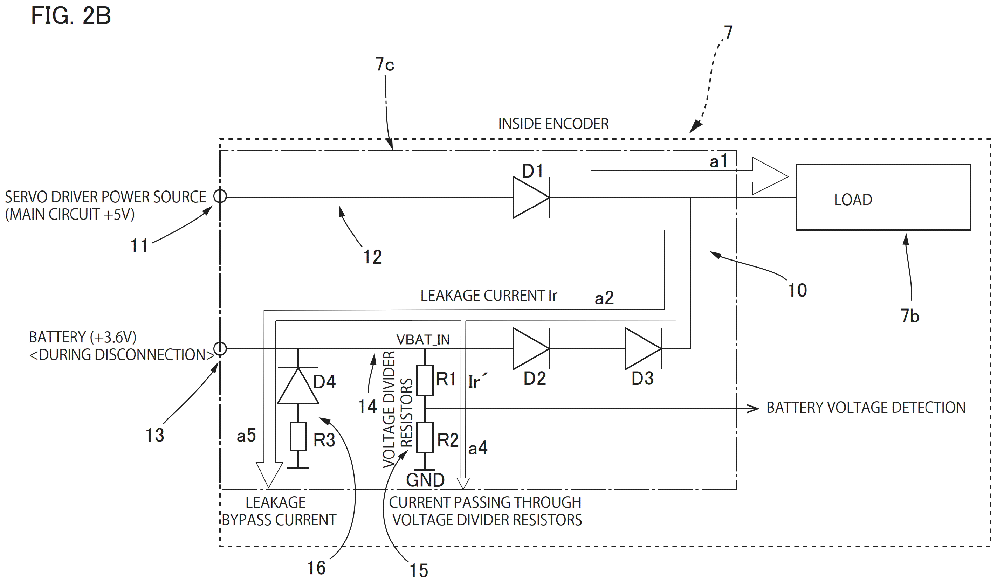

Referring to FIG. 2B, the operation and effects of the power feed circuit 7c when the battery 8 is disconnected or suddenly removed for an unspecified reason shall now be described. In this case, referring to the component of the leakage current Ir that flows to the leakage current bypass line 16 the leakage bypass current, the following relationship holds.

Leakage current Ir = [current passing through voltage divider resistors] + [leakage bypass current]

The leakage bypass current in the leakage current Ir becomes dominant, and almost all of the leakage current Ir flows out through the leakage current bypass line 16 as the leakage bypass current.

On the other hand, if the potential of the voltage divider resistors (the potential at the anode of the second diode D2) is denoted as VBAT_IN, the current flowing through the voltage divider resistors is denoted as Ir', and the resistance values of the voltage divider resistors R1, R2 are represented with the same notation R1, R2, then the potential of the voltage divider resistors is expressed by the following equation.

$$\mathrm{VBAT_IN} = (R1 + R2) \times Ir'$$

As a specific example, when

$$Ir' = 0.375\mu A \text{ and } R1 + R2 = 4M\Omega,$$

$$\mathrm{VBAT_IN} = 4M\Omega \times 0.375\mu A = +1.5V.$$

When the battery is disconnected, the resistive voltage divider circuit 15 detects a voltage value corresponding to +1.5V. By setting a battery disconnection threshold to +2.5V (a value greater than +1.5V), the detected voltage value of +3.6V before battery disconnection becomes +1.5V when the battery is disconnected, which is below the threshold of +2.5V, thus allowing the battery disconnection to be detected.

The discharge termination voltage of a common lithium-ion battery is +2.5V to +3V. Therefore, by setting the battery disconnection threshold to +2.5V and ensuring that the combined resistance of the voltage divider resistors R1, R2 is 4MΩ or less, the voltage V_BAT_IN of the voltage divider resistors during a battery disconnection will not exceed +2.5V. Therefore, by mounting the third diode D4 and the current-limiting resistor R3, it becomes possible to detect battery disconnection on the basis of the detected voltage of the resistive voltage divider circuit. In contrast, without the third diode D4 and the current-limiting resistor R3, the voltage of the voltage divider resistors during a battery disconnection would

exceed 3V, making battery disconnection detection impossible.

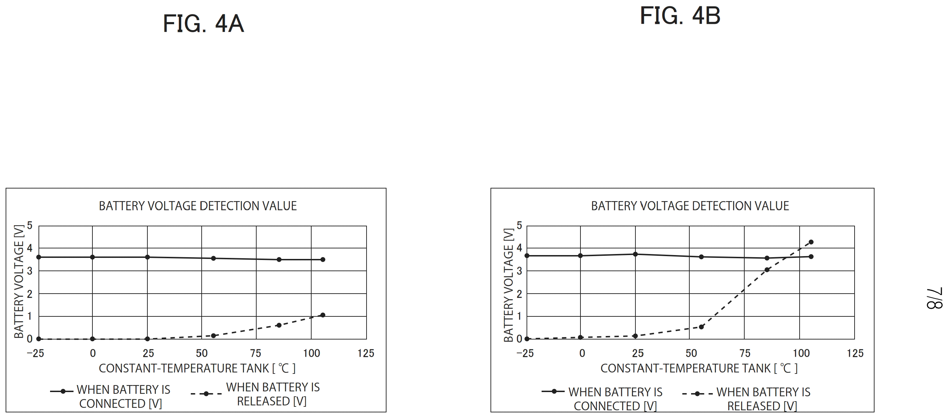

FIG. 4A is a graph of the relationship between temperature and battery voltage (potential VBAT_IN of the voltage divider resistors) in the power feed circuit 7c of the present example, both when the battery is connected and when the battery is released (when the battery is disconnected). FIG. 4B is a graph of the relationship between temperature and battery voltage (potential VBAT_IN of the voltage divider resistors) in the prior-art power feed circuit shown in FIG. 5C, both when the battery is connected and when the battery is released (when the battery is disconnected). As can be seen by comparing these graphs, in the power feed circuit of the present example, the increase in battery voltage accompanying a temperature increase is minimized when the battery is disconnected, whereas in the prior-art power feed circuit, the battery voltage increases significantly beyond the battery disconnection threshold (+2.5V) as the temperature increases. In other words, with a prior-art power feed circuit a battery disconnection state cannot be detected on the basis of the voltage divider resistors at high temperatures, but such a problem can be avoided with the power feed circuit of the present example.

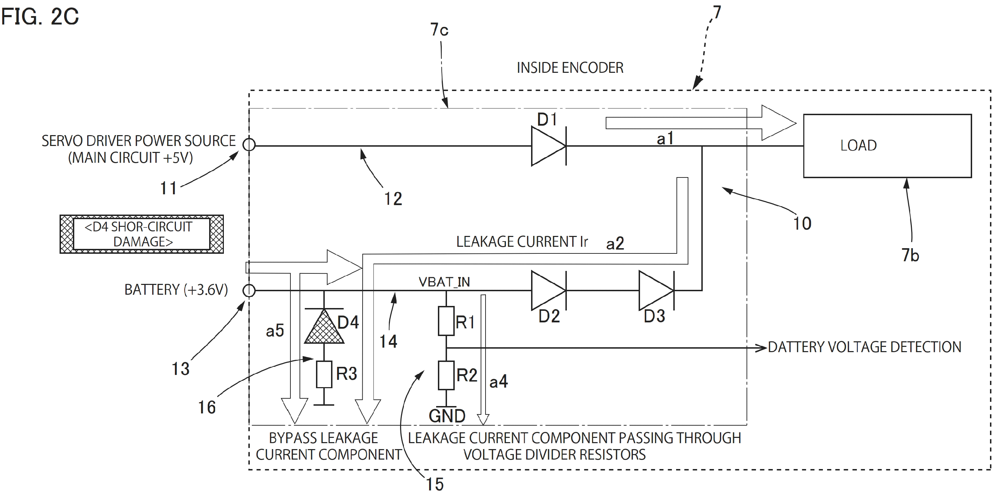

Next, FIG. 2C shall be referred to in describing a case in which the third diode D4 of the leakage current bypass line 16 short-circuits and fails for some reason. The value of the current-limiting resistor R3 in the leakage current bypass line 16 is set to a value sufficiently lower than the combined resistance value of the voltage divider resistors R1, R2 for battery voltage detection. For example, if the voltage divider resistor R1 = 3MΩ, the voltage divider resistor R2 = 1MΩ, and the current-limiting resistor R3 = 10kΩ, when the third diode D4 short-circuits and fails, the combined resistance value Z of these resistors R1, R2, R3 can be approximated to the resistance value of the current-limiting resistor R3. Therefore, the leakage current Ir flows almost entirely to the current-limiting resistor R3, and charging current to the battery can therefore be prevented. In addition, even if the battery is disconnected at this time, the potential VBAT_IN of the voltage divider resistors will not exceed 2V, and battery disconnection can be detected.

If only the third diode D4 is mounted in the leakage current bypass line 16 and the current-limiting resistor R3 is not mounted, a short-circuit failure of the third diode D4 would cause the positive terminal of the battery to short-circuit with the ground potential side GND of the internal circuit of the encoder, resulting in a large current flowing from the battery and presenting a hazard. Such hazards are avoided by mounting the current-limiting resistor R3.

(Modification of power feed circuit)

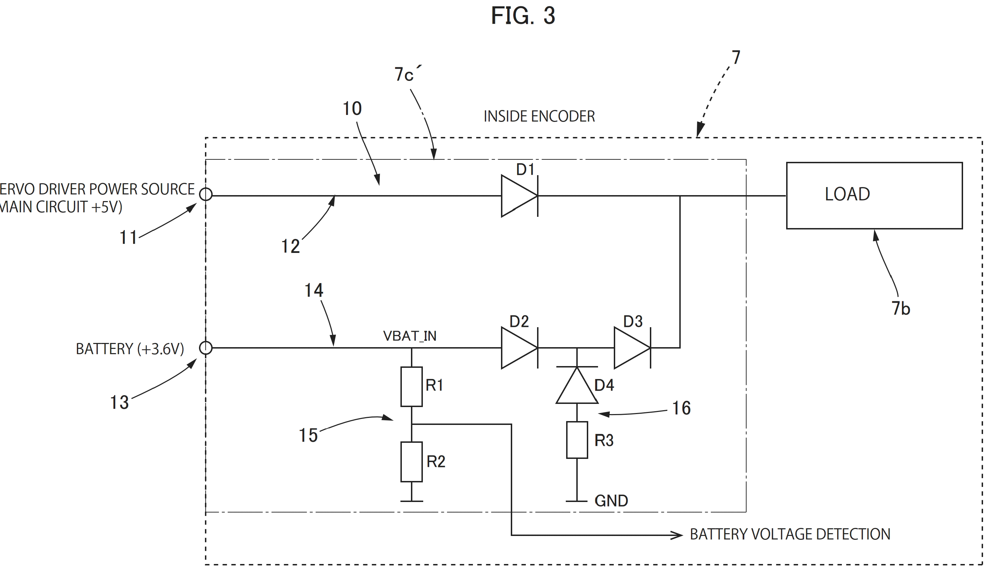

FIG. 3 is an explanatory drawing of a modification of the power feed circuit described above. Since the basic configuration of the power feed circuit 7c' shown in the drawing is the same as that of the power feed circuit 7c described above, the same reference numerals are used for corresponding parts, and descriptions thereof are omitted.

The power feed circuit 7c' of the present example differs in that a leakage current bypass line 16 including a third diode D4 and a current-limiting resistor R3 is placed between the two second diodes D2, D3 connected in series in the battery power source feed line 14. The function and effects of the power feed circuit 7c' thus configured are no different from those of the power feed circuit 7c described above. Moreover, in the present example, it becomes possible to place diodes D1 to D4 in close proximity, improving design flexibility of the diode layout. Moreover, since a dual-element diode can be selected, the power feed circuit 7c' can be reduced in size. Moreover, by using the same diode for the third diode D4 as for the diode D2 or the diode D3, the leakage current of the second diodes D2, D3 similarly flows more easily to the third diode D4 (is more easily bypassed). It is also possible to apply a dual-element diode to the one second diode D2 and the third diode D4, or to the other second diode D3 and the third diode D4.

## Claims

**1.** A power feed circuit that supplies power from a main power source and a battery to a load side via a diode OR circuit provided with a reverse-current-preventing first diode disposed on a main power source feed line and a reverse-current-preventing second diode disposed on a battery power source feed line, the power feed circuit **characterized by** comprising

a leakage current bypass line that bypasses a leakage current of the second diodes to a ground potential side, the leakage current bypass line including a third diode and a current-limiting resistor connected in series to the third diode.

**2.** The power feed circuit according to claim 1, wherein

two diodes connected in series are provided as the second diode, and
the leakage current bypass line connects an anode of either one of said two diodes in the battery power source feed line to the ground potential side.

**3.** The power feed circuit according to claim 1, wherein

a resistive voltage divider circuit for battery voltage detection is provided, and
the resistive voltage divider circuit includes a plurality of voltage divider resistors connected in series between the ground potential side and an anode of the second diode in the battery power source feed line.

**4.** The power feed circuit according to claim 3, wherein
a resistance value of the current-limiting resistor of the leakage current bypass line is not more than 1/100 of a combined resistance value of the voltage divider resistors of the resistive voltage divider circuit.

**5.** The power feed circuit according to claim 1, wherein
the third diode of the leakage current bypass line is the same component as the second diode of the battery power source feed line.

**6.** A battery-backup-type rotation detection device in which rotation information for a rotary body detected by a rotation information detection unit is stored in an onboard storage device,

the rotation detection device **characterized by** comprising a power feed circuit that supplies drive power to the storage device,
and the power feed circuit being the power feed circuit according to any one of claims 1 to 5.

**7.** A motor comprising a battery-backup-type rotation detection device in which motor rotation information detected by a rotation information detection unit is stored in an onboard storage device,
wherein the rotation detection device is the rotation detection device according to claim 6.

**8.** A rotation actuator comprising

a motor,
a reducer that reduces the speed of output rotation of the motor,
and a battery-backup-type rotation detection device in which motor rotation information or reducer rotation information detected by a rotation information detection unit is stored in an onboard storage device,
wherein the rotation detection device is the rotation detection device according to claim 6.

1
2
2a
3
3a
4
4a
4b
5
6
7
7a
7b
7c
8

FIG. 1A

7
7b
LOAD
10
BATTERY VOLTAGE DETECTION
INSIDE ENCODER
D1
D2
D3
7c
14
R1
R2
15
D4
R3
12
GND
16
13
11
SERVO DRIVER POWER SOURCE
(MAIN CIRCUIT +5V)
BATTERY (+3.6V)

FIG. 1B

FIG. 2A

7c
7
INSIDE ENCODER
D1
VO DRIVER POWER SOURCE
AIN CIRCUIT +5V)
a1
LOAD
11
12
10
7b
BATTERY CONSUMPTION CURRENT
LEAKAGE CURRENT Ir
a2
a3
BATTERY (+3.6V)
D4
R1
D2
D3
13
14
BATTERY VOLTAGE DETECTION
16
a5
R3
R2
a4
GND
LEAKAGE
BYPASS CURRENT
CURRENT PASSING THROUGH
VOLTAGE DIVIDER RESISTORS
15

FIG. 2B
7
7c
INSIDE ENCODER
a1
D1
SERVO DRIVER POWER SOURCE
(MAIN CIRCUIT +5V)
LOAD
11
12
10
7b
LEAKAGE CURRENT Ir
a2
BATTERY (+3.6V)
<DURING DISCONNECTION>
VBAT_IN
D4
R1
Ir´
D2
D3
14
VOLTAGE DIVIDER
RESISTORS
BATTERY VOLTAGE DETECTION
13
a5
R3
R2
a4
GND
LEAKAGE
BYPASS CURRENT
CURRENT PASSING THROUGH
VOLTAGE DIVIDER RESISTORS
16
15

FIG. 2C
SERVO DRIVER POWER SOURCE (MAIN CIRCUIT +5V)
11
<D4 SHOR-CIRCUIT DAMAGE>
BATTERY (+3.6V)
13
16
a5
BYPASS LEAKAGE CURRENT COMPONENT
D4
R3
14
12
7c
VBAT_IN
R1
R2
GND
15
LEAKAGE CURRENT COMPONENT PASSING THROUGH VOLTAGE DIVIDER RESISTORS
a4
LEAKAGE CURRENT Ir
a2
D1
D2
D3
a1
INSIDE ENCODER
7
10
DATTERY VOLTAGE DETECTION
LOAD
7b

FIG. 3
7
7c´
10
INSIDE ENCODER
ERVO DRIVER POWER SOURCE
AIN CIRCUIT +5V)
11
12
D1
LOAD
7b
14
VBAT_IN
D2
D3
BATTERY (+3.6V)
13
R1
D4
16
15
R3
R2
GND
BATTERY VOLTAGE DETECTION

FIG. 4B

BATTERY VOLTAGE DETECTION VALUE
BATTERY VOLTAGE [V]
5
4
3
2
1
0
−25
0
25
50
75
100
125
CONSTANT-TEMPERATURE TANK [ °C ]
WHEN BATTERY IS CONNECTED [V]
WHEN BATTERY IS RELEASED [V]

FIG. 4A

BATTERY VOLTAGE DETECTION VALUE
BATTERY VOLTAGE [V]
5
4
3
2
1
0
−25
0
25
50
75
100
125
CONSTANT-TEMPERATURE TANK [ °C ]
WHEN BATTERY IS CONNECTED [V]
WHEN BATTERY IS RELEASED [V]

FIG. 5A
INSIDE ENCODER
SERVO DRIVER POWER SOURCE (MAIN CIRCUIT +5V)
BATTERY (+3.6V)
D1
D2
LOAD
(Prior Art)
FIG. 5B
INSIDE ENCODER
SERVO DRIVER POWER SOURCE (MAIN CIRCUIT +5V)
BATTERY (+3.6V)
D1
D2
D3
LOAD
(Prior Art)
FIG. 5C
INSIDE ENCODER
SERVO DRIVER POWER SOURCE (MAIN CIRCUIT +5V)
BATTERY (+3.6V)
D1
D2
D3
R1
R2
LOAD
BATTERY VOLTAGE DETECTION
(Prior Art)
FIG. 5D
I_F, FORWARD CURRENT (mA)
V_F, FORWARD VOLTAGE (VOLTS)
150°C
125°C
85°C
25°C
−40°C
−55°C
I_R, REVERSE CURRENT (μA)
V_R, REVERSE VOLTAGE (VOLTS)
T_A = 150°C
T_A = 125°C
T_A = 85°C
T_A = 25°C
EXCERPTED FROM ONSEMI BAT54H DATASHEET

# INTERNATIONAL SEARCH REPORT

International application No. **PCT/JP2023/040997**

**A. CLASSIFICATION OF SUBJECT MATTER**

***H02J 7/00***(2006.01)i; ***H02J 1/00***(2006.01)i
FI: H02J7/00 302A; H02J1/00 304H

According to International Patent Classification (IPC) or to both national classification and IPC

**B. FIELDS SEARCHED**

Minimum documentation searched (classification system followed by classification symbols)

H02J7/00; H02J1/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 7-336906 A (SHARP KABUSHIKI KAISHA) 22 December 1995 (1995-12-22) paragraphs [0004], [0018], [0021], fig. 7 | 1-8 |
| Y | JP 2020-18127 A (FUJIFILM CORPORATION) 30 January 2020 (2020-01-30) paragraph [0049], fig. 6 | 1-8 |
| Y | WO 2008/149475 A1 (PANASONIC CORPORATION) 11 December 2008 (2008-12-11) claim 2, fig. 1 | 1-8 |
| Y | JP 2023-136257 A (MAKITA CORPORATION) 29 September 2023 (2023-09-29) paragraphs [0104]-[0111], fig. 3 | 2, 6-8 |
| Y | JP 2022-95235 A (HITACHI ASTEMO, LTD.) 28 June 2022 (2022-06-28) claim 1, fig. 1 | 2, 6-8 |
| Y | JP 5-203684 A (SHARP KABUSHIKI KAISHA) 10 August 1993 (1993-08-10) paragraph [0005], fig. 7 | 3-4, 6-8 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 January 2024** | **23 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2023/040997**

| Patent document cited in search report | Publication date (day/month/year) | Patent family member(s) | Publication date (day/month/year) |
|---|---|---|---|
| JP 7-336906 A | 22 December 1995 | (Family: none) | |
| JP 2020-18127 A | 30 January 2020 | (Family: none) | |
| WO 2008/149475 A1 | 11 December 2008 | US 2010/0253284 A1<br>claim 2, fig. 1<br>EP 2157657 A1<br>CN 101682091 A<br>KR 10-2010-0033509 A | |
| JP 2023-136257 A | 29 September 2023 | (Family: none) | |
| JP 2022-95235 A | 28 June 2022 | (Family: none) | |
| JP 5-203684 A | 10 August 1993 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006211829 A


### Non-patent literature cited in the description


- *Toshiba Thionyl Chloride Lithium Battery Technology Catalog*, May 2016, 22